# EUROPÄISCHE PATENTSCHRIFT

(11) **EP 2 791 990 B1**
(45) Veröffentlichungstag und Bekanntmachung des Hinweises auf die Patenterteilung: **12.07.2017**
(21) Anmeldenummer: 12788504.4
(22) Anmeldetag: 15.11.2012
(51) Int. Cl.: H01M 2/02, H01M 2/10, H01M 10/0525, H01M 10/0587, H01M 2/04, H01M 2/08

(54) **HARTSCHALENZELLGEHÄUSE MIT DAMPFSPERRSCHICHT**
HOUSING WITH A HARD SHELL AND A VAPOUR BARRIER LAYER
BOÎTIER AVEC COQUE SOLIDE ET UNE FILME BARRIÈRE DE VAPEUR

(30) Priorität: 15.12.2011 DE 102011088698; 13.04.2012 DE 102012206075
(43) Veröffentlichungstag der Anmeldung: 22.10.2014
(73) Patentinhaber: Robert Bosch GmbH, 70442 Stuttgart (DE); Samsung SDI Co., Ltd., Yongin-si Gyeonggi-do 446-577 (KR)
(72) Erfinder: WOERHLE, Thomas, 70469 Stuttgart-Feuerbach (DE); FETZER, Joachim, 73342 Bad-Ditzenbach (DE); FINK, Holger, 70567 Stuttgart (DE)
(74) Vertreter: Bee, Joachim
(86) Internationale Anmeldenummer: PCT/EP2012/072745
(87) Internationale Veröffentlichungsnummer: WO 2013/087349

(56) Entgegenhaltungen:
- DE-T2- 60 133 575
- US-A1- 2004 137 321
- US-A1- 2007 207 379

## Beschreibung

Die vorliegende Erfindung betrifft ein Hartschalenzellgehäuse für eine einzelne galvanische Zelle, eine derartige galvanische Zelle, Verfahren zu deren Herstellung sowie ein mit einer derartigen galvanischen Zelle ausgestattetes Fahrzeug.

### Stand der Technik

Es zeichnet sich ab, dass in Zukunft bei stationären Anwendungen, beispielsweise bei Solar- und Windkraftanlagen), bei mobilen Anwendungen, beispielsweise bei Fahrzeugen, wie Hybrid- und Elektrofahrzeugen, und im Consumer-Bereich, beispielsweise bei Laptops und Mobiltelefone, vermehrt Batteriesysteme zum Einsatz kommen werden, an welche sehr hohe Anforderungen bezüglich der Sicherheit, Zuverlässigkeit, Leistungsfähigkeit und Lebensdauer gestellt werden.

Ein wichtiger Parameter der Leistungsfähigkeit ist die Energiedichte, welche beispielsweise in Wattstunden pro Kilogramm (Wh/kg) angegeben wird. Die Kapazität einer galvanischen Zelle wird durch die sogenannten aktiven beziehungsweise elektrochemisch aktiven Materialien bestimmt. Neben diesen Materialien weisen galvanische Zellen auch sogenannten Passivmaterialien, wie Separatoren, Isolatoren, Elektrodenbinder und Gehäuse- beziehungsweise Verpackungselemente auf, deren Gewicht ebenso wie das Gewicht der Aktivmaterialien einen Einfluss auf die Energiedichte hat.

Prädestiniert für ein breites Einsatzgebiet sind insbesondere Lithiumionenzellen, da sich diese unter anderem aus durch hohe Energiedichten der aktiven Materialien und eine äußerst geringe Selbstentladung auszeichnen. Lithiumionenzellen weisen eine positive Elektrode (Kathode) und negative Elektrode (Anode) auf. Das aktive Material der negativen Elektrode (Anode) einer Lithiumionenzelle dabei dazu ausgelegt Lithiumionen (Li⁺) reversibel einzulagern (Interkalation) oder wieder auszulagern (Deinterkalation) und wird daher auch als
Interkalationsmaterial bezeichnet. Herkömmlicherweise wird Graphit auf der Anodenseite als Interkalationsmaterial eingesetzt.

Ein weiteres attraktives Batterie-System sind wiederaufladbare metallische Lithium-Systeme, welche ebenfalls eine positive Elektrode (Kathode) und negative Elektrode (Anode) aufweisen, bei denen das Aktivmaterial der negativen Elektrode (Anode) jedoch kein lithiuminterkalierendes Material, sondern metallisches Lithium oder eine Lithiumlegierung ist.

Um eine hohe mechanische Stabilität zu erzielen und hohe Sicherheitsanforderungen, beispielsweise bei Fahrzeugen, zu erfüllen werden Lithiumionenzellen und Lithiumzellen mit metallischer Lithiumanode für derartige Anwendungen herkömmlicherweise durch rein metallische Hartschalenzellgehäuse, so genannte Hardcase-Gehäuse) vor Umwelteinflüssen, insbesondere vor einem Eintritt von Feuchtigkeit in das Zellinnere geschützt. Derzeit werden derartige Hartschalenzellgehäuse meist aus Aluminium durch kalte Tiefziehverfahren hergestellt. Neben einem mechanischen Schutz, schützen metallische Hartschalenzellgehäuse die Komponenten der darin eingehausten Zelle/n auch vor Feuchtigkeit, da das metallische Gehäusematerial auch als Feuchtigkeits- beziehungsweise Dampfsperre dient.

### Offenbarung der Erfindung

Gegenstand der vorliegenden Erfindung ist ein Hartschalenzellgehäuse für eine einzelne Alkalimetallzelle (1), umfassend- einen Gehäusegrundkörper (2) mit einem Innenraum zur Aufnahme der Zellkomponenten (30) einer einzelnen Alkalimetallzelle, undeinen Gehäusedeckel (3) zum Verschliessen des Innenraums des Gehäusegrundkörpers (2), wobei der Gehäusegrundkörper (2) zumindest im Wesentlichen aus Kunststoff ausgebildet ist und mindestens eine Dampfsperrschicht (4) umfasst,dadurch gekennzeichnet, dass der Gehäusegrundkörper (2) und der Gehäusedeckel (3) Verbindungselemente (Z) aufweisen, welche dazu ausgelegt sind beim Verschliessen des Gehäuses eine Nut-Feder-Steckverbindung auszubilden, wobei die Verbindungselemente (Z) zum Ausbilden der Nut-Feder-Steckverbindung die Innenraumöffnung des Gehäusegrundkörpers (2) umlaufen, wobei die Verbindungselemente (Z) zum Ausbilden der Nut-Feder-Steckverbindung mit der Dampfsperrschicht (4) bedeckt beziehungsweise mit einer darin integrierten Dampfsperrschicht (4) versehen sind, und wobei beim Verschliessen des Gehäuses beziehungsweise beim Ausbilden der Nut-Feder-Steckverbindung die die Verbindungselemente (Z) bedeckende Dampfsperrschichten aneinander angepresst sind. Unter einer Alkalimetallzelle kann insbesondere eine galvanische Zelle verstanden werden, welche als elektrochemisch aktives Material, beispielsweise Anodenmaterial, ein Alkalimetall, wie Lithium oder Natrium, umfasst.

Unter den Zellkomponenten einer Alkalimetallzelle können insbesondere die elektrochemisch aktiven Komponenten einer Alkalimetallzelle, wie die Anode, die Kathode, der Elektrolyt und/oder das Leitsalz, sowie elektrische Komponenten, wie elektrische Ableiter, elektrische Isolatoren und/oder Separatoren innerhalb der Alkalimetallzelle verstanden werden.

Unter einer Dampfsperrschicht wird kann insbesondere eine Schicht aus einem Material verstanden werden, welches einen hohen Wasserdampfdiffusionswiderstand, aufweist mit einer Wasserdampfdiffusionswiderstandszahl von ≥ 10.000. Vorzugsweise besitzt das Material der Dampfsperrschicht einen höheren Wasserdampfdiffusionswiderstand als der Kunststoff aus dem der Gehäusegrundkörper beziehungsweise der Gehäusedeckel ausgebildet ist. Der Wasserdampfdiffusionswiderstand des Materials der Dampfsperrschicht kann insbesondere deutlich höher, beispielsweise um einen Faktor ≥ 5, beispielsweise um einen Faktor ≥ 10 oder sogar um einen Faktor ≥ 50 oder ≥ 90 oder gegebenenfalls sogar um einen Faktor ≥ 1.000, größer sein als der Wasserdampfdiffusionswiderstand des der Kunststoffes aus dem der Gehäusegrundkörper beziehungsweise der Gehäusedeckel ausgebildet ist. Beispielsweise kann das Material der Dampfsperrschicht eine Wasserdampfdiffusionswiderstandszahl von ≥ 10.000, insbesondere von ≥ 100.000, beispielsweise von ≥ 500.000 oder von ≥ 900.000 oder sogar von um etwa 1.000.000, aufweisen.

Dadurch, dass der Grundgehäusekörper im Wesentlichen aus Kunststoff und nicht wie bei herkömmlichen Hartschalenzellgehäusen aus Metall ausgebildet ist, kann vorteilhafterweise das Gehäusegewicht sowie dessen Material- und Her-stellungskosten deutlich verringert werden. Durch ein verringertes Gewicht kann wiederum vorteilhafterweise die spezifische gravimetrische Energie auf Zellebene deutlich verbessert werden, welche insbesondere beim Einsatz in mobilen Anwendungen von besonderem Interesse ist.

Da die Materialmenge zur Ausbildung des Gehäusedeckels geringer als die Materialmenge zur Ausbildung des Gehäusegrundkörpers ist, wirkt sich das Materialgewicht des Gehäusedeckels weniger stark auf das Gesamtgewicht des Hartschalenzellgehäuses aus als das Materialgewicht des Gehäusegrundkörpers. Daher ist es grundsätzlich möglich den Gehäusedeckel aus Metall auszugestalten.

Im Rahmen einer Ausführungsform sind jedoch sowohl der Gehäusegrundkörper als auch der Gehäusedeckel zumindest im Wesentlichen aus Kunststoff ausgebildet, wobei der Gehäusegrundkörper und der Gehäusedeckel mindestens eine Dampfsperrschicht umfassen.

Dadurch, dass der Gehäusegrundkörper und beispielsweise auch der Gehäusedeckel zumindest im Wesentlichen aus Kunststoff und nicht wie herkömmlichen Hartschalenzellgehäusen aus Metall ausgebildet sind, kann vorteilhafterweise das Gehäusegewicht sowie dessen Material- und Herstellungskosten weiter verringert werden und damit die spezifische gravimetrische Energie auf Zellebene weiter verbessert werden.

Zudem weist Kunststoff elektrisch isolierende Eigenschaften auf und ist im Gegensatz zu Metallen nicht elektrisch leitend. Dies bietet den Vorteil einer vereinfachten elektrischen Isolation und einer Vermeidung von im Hochvoltbereich ansonsten auftretenden Isolationsproblemen.

Dadurch, dass der Gehäusegrundkörper durch den Gehäusedeckel verschließbar ist, liegen darin aufgenommene Zellen zudem vorteilhafterweise nicht offen, werden nach Außen elektrisch isoliert und können durch das Hartschalenzellgehäuse gut gegen das Einwirken von äußeren mechanische Kräften geschützt werden. Zudem kann da das Gehäuse im Wesentlichen aus Kunststoff ausgebildet ist, beispielsweise im Fall eines Unfalls, die Gefahr verringert werden, dass metallische Gehäusebruchstücke in die Zellen gelangen, welche gegebenenfalls zu einem internen Kurzschluss führen könnten. So kann insbesondere die Sicherheit erhöht werden. Dies ist insbesondere beim Einsatz in mobilen Anwendungen, beispielsweise in einem Fahrzeug, von Vorteil.

Zudem bietet eine Ausbildung des Gehäuses aus Kunststoff gegenüber einer Ausbildung des Gehäuses aus Metall den Vorteil einer freieren Formgebung des Gehäuses. So kann zum Beispiel eine bessere Anpassung des Gehäuses an die Form des Wickels erfolgen. Beispielsweise können im Innenraum des Gehäuses Rundung gestaltet werden, welche zum Beispiel die Zellkomponentenpackung, insbesondere Wickelpackung, einer ideal prismatischen Form angleicht. Weiterhin kann so eine bessere mechanische Halterung der Zellkomponenten im Gehäuse erzielt und so genannte Retainer zur Positionshaltung der Zellen eingespart werden. Darüber hinaus kann durch eine optimierte Gehäusegestaltung Leerraum und freier Flüssigelektrolyt im Zellinneren eingespart, thermische Übergänge verbessert, eine gleichmäßigere Temperaturverteilung erzielt und die Lebensdauer des galvanischen Elements verlängert werden. Weiterhin ermöglicht eine Ausbildung des Gehäuses aus Kunststoff eine Verringerung von Vibrationen, was sich wiederum vorteilhaft auf die Lebensdauer von elektrischen Kontakten, beispielsweise zwischen Terminals und/oder Kollektoren und zellverbindenden Ableiterelementen auswirkt.

Es hat sich herausgestellt, dass die (Wasser-)Dampfdurchlässigkeit von Kunststoffen von der chemischen und physikalischen Beschaffenheit des Kunststoffes abhängt und dass mit zum Gehäusebau üblichen und günstigen Kunststoffen nicht ohne weiteres eine Dampfdichtigkeit erzielt werden kann, welchen den Maßstäben für Alkalimetallzellen und insbesondere für Lithiumionenzellen entspricht. Erfreulicherweise hat sich jedoch ebenfalls herausgestellt, dass dem durch den Einsatz einer Dampfsperrschicht entgegen gewirkt werden, da durch die Dampfsperrschicht ein Eindingen von Feuchtigkeit durch eine Permeation von Wasserdampf durch einen ansonsten dampfdurchlässigen Kunststoff verhindert werden und so eine auch für Alkalimetallzellen und insbesondere Lithiumionenzellen geeignete Feuchtigkeits- beziehungsweise Dampfdichtigkeit erzielt werden kann. Überraschenderweise können Dampfsperrschichten sogar so sperrend gegen Wassermoleküle sein, wie herkömmlicherweise eingesetzte gewalzte Aluminiumfolie. So kann vorteilhafterweise durch das Hartschalenzellgehäuse ein Schutz vor Umwelteinflüssen, wie Salznebel, Kondenswasser, gewährleistet werden. Zudem kann durch eine Dampfsperrschicht gegebenenfalls ein Abdiffundieren von Elektrolytlösungsmittelmolekülen verhindert werden.

Durch die Kombination von Kunststoff und Dampfsperrschicht ist es daher vorteilhafterweise möglich ein Hartschalenzellgehäuse mit geringem Gewicht bereitzustellen, welches ähnlich oder sogar genauso mechanisch stabil und dampfsperrend sein kann wie herkömmliche metallische Hartschalenzellgehäuse und damit insbesondere für galvanische Elemente mit feuchtigkeitsempfindlichen Komponenten, wie Alkalimetallzellen, beispielsweise Lithiumzellen, geeignet ist und es ermöglicht bisherige metallische Gehäuse für galvanische Elemente zu ersetzen.

Unter einer Lithiumzelle kann insbesondere eine Alkalimetallzelle verstanden werden, welche als elektrochemisch aktives Material, beispielsweise Anodenmaterial, Lithium umfasst. Dabei kann unter einer Lithiumzelle sowohl eine Alkalimetallzelle mit einer metallischen Lithiumanode, wie eine Lithiumsauerstoffzelle, als auch eine Alkalimetallzellen mit einer lithiuminterkalierenden Anode, wie eine Lithiumionenzelle, verstanden werden.

Unter einem zumindest im Wesentlichen aus Kunststoff ausgebildeten Gehäusegrundkörper beziehungsweise Gehäusedeckel kann insbesondere verstanden werden, dass das Materialvolumen des Gehäusegrundkörpers beziehungsweise Gehäusedeckels, welches durch Kunststoff eingenommen wird, insbesondere zumindest mehr als 75 Prozent des Gesamtmaterialvolumens des Gehäusegrundkörpers beziehungsweise Gehäusedeckels beträgt. Beispielsweise kann das Materialvolumen des Gehäusegrundkörpers beziehungsweise Gehäusedeckels, welches durch Kunststoff eingenommen wird, dabei ≥ 90 Prozent des Gesamtmaterialvolumens des Gehäusegrundkörpers beziehungsweise Gehäusedeckels betragen. Insbesondere können dabei zumindest die tragenden Abschnitte des Gehäusegrundkörpers beziehungsweise Gehäusedeckels aus Kunststoff ausgebildet sein. Daneben kann ein zumindest im Wesentlichen aus Kunststoff ausgebildeter Gehäusegrundkörper beziehungsweise Gehäusedeckel Abschnitte aus anderen Materialien aufweisen. Zum Beispiel kann der Gehäusegrundkörper beziehungsweise Gehäusedeckel Abschnitte aufweisen, welche eine nicht-kunststoffbasierte Feuchtigkeistbarriereschicht und/oder metallische Elemente, wie elektrische Schnittstellen, so genannte (äußere Terminals) und/oder hydraulische Schnittstellen und/oder Schnittstellendurchführungen, umfassen. Bezogen auf das Gesamtmaterialvolumen des Gehäusegrundkörpers beziehungsweise Gehäusedeckels können die Abschnitte des Gehäusegrundkörpers beziehungsweise Gehäusedeckels, welche aus anderen Materialien als Kunststoff ausgebildet sind, beispielsweise in Summe ein Materialvolumen von < 75 %, beispielsweise von < 10 %, einnehmen.

Es ist möglich, dass der Gehäusegrundkörper beziehungsweise der Gehäusedeckel ausschließlich oder fast ausschließlich aus Kunststoff hergestellt sind. Im Fall des Einsatzes einer kunststoffbasierten Dampfsperrschicht, kann der Gehäusegrundkörper beziehungsweise der Gehäusedeckel beispielsweise ausschließlich aus Kunststoff ausgebildet sein. Da zum Erreichen eines dampfsperrenden Effektes nur wenig Material benötigt wird, kann im Fall des Einsatzes einer, beispielsweise metallischen Dampfsperrschicht, der Gehäusegrundkörper beziehungsweise der Gehäusedeckel beispielsweise immer noch als fast ausschließlich aus Kunststoff ausgebildet bezeichnet werden, auch wenn der Gehäusegrundkörper beziehungsweise der Gehäusedeckel eine geringe Menge an Metall oder Halbmetall umfasst.

Im Rahmen einer weiteren Ausführungsform ist die Alkalimetallzelle eine Lithiumionenzelle.

Lithiumionenzellen stellen eine spezielle Form von Lithiumzellen dar und weisen keine metallische Lithiumanode, sondern eine Anode aus einem so genannten Interkalationsmaterial, beispielsweise Graphit, auf, in welches Lithiumionen reversibel eingelagert (interkaliert) und wieder ausgelagert (deinterkaliert) werden können. Lithiumionenzellen unterscheiden sich weiterhin von Lithiumzellen mit metallischer Lithiumanode dadurch, dass Lithiumionenzellen ein in der Regel äußerst feuchtigkeitsempfindliche Leitsalze, beispielsweise Lithiumhexafluorophospat (LiPF₆), enthalten, welche unter Umständen in Gegenwart von Wasser bis hin zu Fluorwasserstoff (HF) hydrolisieren können. Durch die Dampfsperrschicht kann vorteilhafterweise ein Eindringen von Feuchtigkeit, insbesondere in Form von Wasserdampf, durch den Kunststoff in das Gehäuseinnere und damit eine Hydrolyse des Leitsalzes der Lithiumionenzelle zu Fluorwasserstoff vermieden werden.

Im Rahmen einer weiteren Ausführungsform ist der Innenraum des Gehäusegrundkörpers zur Aufnahme eines einzelnen Zellwickels, insbesondere Lithiumionenzellwickels, ausgelegt.

Unter einem Zellwickel (englisch: "jelly roll") kann insbesondere eine spezielle, nämlich wickelförmige, Anordnung der Zellkomponenten einer Alkalimetallzelle verstanden werden. Ein Zellwickel kann zum Beispiel ein wickelförmiges Bauteil sein, welches neben den elektrochemisch aktiven Komponenten einer Alkalimetallzelle, elektrische Ableiterelemente, wie Ableiterfolien, sowie elektrische Isolationselemente, wie eine oder mehrere Isolationsfolien und/oder eine oder mehrere Separatorfolien, umfasst.

Im Rahmen einer weiteren Ausführungsform ist die Dampfsperrschicht direkt auf das Material des Gehäusegrundkörpers (oder des Gehäusegrundkörpers und des Gehäusedeckels aufgebracht. So kann vorteilhafterweise auf zusätzliche Schichten wie Haft- beziehungsweise Klebeschichten verzichtet und Gewicht, Kosten und Raumbedarf weiter reduziert werden.

Im Rahmen einer weiteren Ausführungsform ist die Dampfsperrschicht eine metallische, organische, polymere oder gläserne Schicht ist. Mit derartigen Schichten kann vorteilhafterweise ein dampfsperrender Effekt erzielt werden.

Die Dampfsperrschicht kann beispielsweise eine Schichtdicke von ≥ 1 µm bis ≤ 20 µm aufweisen.

Im Rahmen einer weiteren Ausführungsform ist die Dampfsperrschicht durch Aufdampfen, durch Sputtern, durch galvanisches Beschichten, durch Sprühen, durch Tauchen und/oder durch Walzplatieren, insbesondere durch Aufdampfen, durch Sputtern, durch galvanisches Beschichten und/oder durch Walzplatieren, aufgebracht. Diese Auftragtechniken haben sich zum Aufbringen der Dampfsperrschicht als vorteilhaft erwiesen. Dabei kann die Dampfsperrschicht in einem Verfahrensschritt auf den Gehäusegrundkörper und den Gehäusedeckel aufgebracht sein. Gegebenenfalls kann der Untergrund, insbesondere der Kunststoff des Gehäusegrundkörpers beziehungsweise des Gehäusedeckels vor dem Aufbringen der Dampfsperrschicht einer Plasma- und/oder Korona-Behandlung unterzogen werden. So kann vorteilhafterweise die Haftung der Dampfsperrschicht an dem Untergrund verbessert werden.

Im Rahmen einer weiteren Ausführungsform ist die Dampfsperrschicht eine metallische Schicht ist. Insbesondere kann die die Dampfsperrschicht Aluminium und/oder Chrom und/oder Silicium und/oder Eisen umfassen. Insbesondere kann die Dampfsperrschicht aus Aluminium und/oder Chrom und/oder Silicium und/oder Edelstahl ausgebildet sein. Eine metallische Dampfsperrschicht kann beispielsweise durch Aufdampfen, durch Sputtern oder durch galvanisches Beschichten aufgebracht sein.

Gegebenenfalls kann die metallische Dampfsperrschicht eine superhydrophobe, nanostrukturierte Schicht sein. Die superhydrophoben Eigenschaften können dabei insbesondere analog zum so genannten Lotuseffekt durch eine Strukturierung, insbesondere im Nanometerbereich, erzielt werden. Zum Beispiel kann die metallische Dampfsperrschicht mindestens ein nanostrukturiertes Halbmetall, insbesondere nanostrukturiertes Silicium, umfassen. Insbesondere kann die Dampfsperrschicht aus mindestens einem nanostrukturiertes Halbmetall, beispielsweise nanostrukturiertem Silicium, ausgebildet sein.

Insofern die Dampfsperrschicht eine metallische Schicht ist, ist es möglich auf zumindest einen Teil der Dampfsperrschicht, beispielsweise den an den Innenraum angrenzenden Teil eine Isolationsschicht aus einem elektrisch isolierenden Material aufzutragen. Eine elektrische Isolation kann jedoch auch durch andere Maßnahmen, beispielsweise durch das später erläuterte Verpacken von Zellkomponenten in Kunststoffverpackungsfolien erzielt werden.

Die Dampfsperrschicht kann jedoch ebenso eine organische Schicht sein. Insbesondere kann die Dampfsperrschicht Parylen umfassen oder daraus ausgebildet sein.

Insbesondere kann die Dampfsperrschicht eine polymere Schicht sein. Beispielsweise kann die Dampfsperrschicht Parylen und/oder mindestens ein nanostrukturiertes Polyolefin umfassen oder daraus ausgebildet sein.

Eine organische beziehungsweise polymere Dampfsperrschicht kann beispielsweise durch Sprühen oder Tauchen, insbesondere Sprühen, aufgebracht sein.

Insbesondere kann die organische beziehungsweise polymere Dampfsperrschicht eine superhydrophobe, nanostrukturierte Schicht sein. Die superhydrophoben Eigenschaften können dabei insbesondere analog zum so genannten Lotuseffekt durch eine Strukturierung, insbesondere im Nanometerbereich, erzielt werden, Zum Beispiel kann die Dampfsperrschicht mindestens ein nanostrukturiertes Polyolefin, insbesondere nanostrukturiertes Polypropylen (PP) und/oder Polyethylen (PE), umfassen. Insbesondere kann die Dampfsperrschicht aus mindestens einem nanostrukturierten Polyolefin, beispielsweise nanostrukturiertes Polypropylen (PP) und/oder Polyethylen (PE), ausgebildet sein.

Die Dampfsperrschicht kann jedoch ebenso eine gläserne Schicht sein. Beispielsweise kann die Dampfsperrschicht Siliciumdioxid umfassen.

Insbesondere kann die Dampfsperrschicht aus mindestens einem nanostrukturierten Polyolefin, beispielsweise nanostrukturiertes Polypropylen (PP) und/oder Polyethylen (PE), und/oder mindestens einem nanostrukturiertes Halbmetall, beispielsweise nanostrukturiertem Silicium, ausgebildet sein.

Diese superhydrophoben Materialen haben den Vorteil, dass sie - auch wenn sie im unmittelbaren Kontakt mit elektrochemisch aktiven Zellkomponenten, wie den organischen Carbonaten und/oder Lithium-Leitsalz, stehen - einen hohe chemische und elektrochemische Langzeitstabilität aufweisen können. Besonders gute Ergebnisse konnten vorteilhafterweise mit nanostrukturiertem Poylpropylen (PP) erzielt werden.

Im Rahmen einer weiteren Ausführungsform sind zumindest die im geschlossenen Zustand des Gehäuses außen liegenden Flächen des Gehäusegrundkörpers beziehungsweise des Gehäusegrundkörpers und des Gehäusedeckels, insbesondere im Wesentlichen vollständig, mit einer Dampfsperrschicht bedeckt.

Im Rahmen einer weiteren Ausführungsform sind zumindest die im geschlossenen Zustand des Gehäuses innen liegenden Flächen des Gehäusegrundkörpers beziehungsweise des Gehäusegrundkörpers und des Gehäusedeckels, insbesondere im Wesentlichen vollständig, mit einer Dampfsperrschicht bedeckt. Die Applizierung einer innen liegenden Dampfsperrschicht weist zusätzlich zu den bereits erläuterten Vorteilen insbesondere bei einer später genauer erläuterten Ausführungsform des Hartschalenzellgehäuse, in welcher der Gehäusegrundkörperinnenraum durch Trennwände in Fächer unterteilt ist, den Vorteil auf, dass im Fall einer defekten Zelle eines Moduls die anderen Zellen dieses Moduls besser geschützt werden können.

Im Rahmen einer weiteren Ausführungsform ist die Dampfsperrschicht in den Kunststoff des Gehäusegrundkörpers beziehungsweise des Gehäusegrundkörpers und des Gehäusedeckels integriert. Insbesondere kann dabei die Dampfsperrschicht derart in den Kunststoff des Gehäusegrundkörpers beziehungsweise des Gehäusedeckels integriert sein, dass die Dampfsperrschicht den Gehäuseinnenraum im geschlossenen Zustand des Gehäuses im Wesentlichen vollständig umgibt.

Im Rahmen einer weiteren Ausführungsform ist der Gehäusegrundkörper beziehungsweise sind der Gehäusegrundkörper und der Gehäusedeckel zumindest im Wesentlichen aus einem Kunststoff ausgebildet, welcher mindestens ein Polymer umfasst, welches ausgewählt ist aus der Gruppe bestehend aus Polyolefinen, Polyphenylensulfiden und Kombinationen davon. Beispielsweise können der Gehäusegrundkörper und der Gehäusedeckel aus Polypropylen (PP), Polyethylen (PE), Polypropylen-Polyethylen-Copolymer (PP/PE) oder Polyphenylensulfid (PPS) ausgebildet sein. Diese Kunststoffe weisen vorteilhafterweise eine ausreichende Temperaturbeständigkeit, eine gute Chemikalienbeständigkeit und eine gute mechanische Stabilität auf.

Der Gehäusegrundkörper beziehungsweise der Gehäusedeckel kann beispielsweise eine Wandstärke von > 100 µm aufweisen.

Der Gehäusegrundkörper beziehungsweise der Gehäusegrundkörper und der Gehäusedeckel können beispielsweise durch ein Tiefziehverfahren oder Spritzgussverfahren, insbesondere Spritzgussverfahren, insbesondere aus Kunststoff, hergestellt sein. Durch den Einsatz dieser Verfahren für Kunststoffe sind viele Formen realisierbar, welche es ermöglichen, Batterien optimaler, beispielsweise in Fahrzeugen, unterzubringen. Der Gehäusegrundkörper und der Gehäusedeckel weisen Verbindungselemente auf, welche dazu ausgelegt sind beim Verschließen des Gehäuses eine Nut-Feder-Steckverbindung auszubilden. Die Verbindungselemente zum Ausbilden der Nut-Feder-Steckverbindung umlaufen die Innenraumöffnung des Gehäusegrundkörpers. So kann vorteilhafterweise ein luftdichtes Schließen des Hartschalenzellgehäuses und eine gute Dichtwirkung beim Verschließen des Gehäuses erzielt werden. Insbesondere kann auf den Stirnseiten der, die Öffnung des Gehäusegrundkörperinnenraums begrenzenden Wandungen des Gehäusegrundkörpers mindestens ein nutförmiges und/oder federförmiges Verbindungselement ausgebildet sein, insbesondere wobei der Gehäusedeckel dazu korrespondierendes Verbindungselemente zum Ausbilden einer Nut-Feder-Steckverbindung aufweist.

Um die Dichtwirkung im Rahmen dieser Ausführungsform zu erzielen sind auch die Verbindungselemente zum Ausbilden der Nut-Feder-Steckverbindung mit einer Dampfsperrschicht bedeckt beziehungsweise mit einer darin integrierten Dampfsperrschicht versehen. Beim Verschließen des Gehäuses beziehungsweise beim Ausbilden der Nut-Feder-Steckverbindung sind die die Verbindungselemente bedeckenden Dampfsperrschichten aneinander angepresst. So kann ein Eintritt von Feuchtigkeit besonders effektiv verhindert werden und die Feuchtigkeits- beziehungsweise Dampfdichtigkeit gesteigert werden. Daher sind die Verbindungselemente zum Ausbilden der Nut-Feder-Steckverbindung mit einer Dampfsperrschicht bedeckt beziehungsweise mit einer darin integriertem Dampfsperrschicht versehen. Insofern eine Isolationsschicht ohne dampfsperrende Eigenschaften vorgesehen ist, ist die Dampfsperrschicht vorzugsweise im Bereich der Verbindungselemente zum Ausbilden der Nut-Feder-Steckverbindung nicht mit der Isolationsschicht bedeckt.

Weiterhin kann das Hartschalenzellgehäuse eine Temperiervorrichtung aufweisen. Die Temperiervorrichtung kann beispielsweise plattenförmig, zum Beispiel in Form einer Kühlplatte, ausgestaltet sein. Um die Temperiervorrichtung mit einem Temperiermedium, insbesondere Kühlmedium, zu versorgen, kann das Hartschalenzellgehäuse weiterhin mindestens zwei, insbesondere von Außen zugängliche, hydraulische Schnittstellen aufweisen.

Weiterhin kann das Hartschalenzellgehäuse mindestens zwei, insbesondere von Außen zugängliche, elektrische Schnittstellen (Terminals) aufweisen, über welche Alkalimetallzellen im Inneren des Gehäuses elektrisch kontaktiert werden können.

Hinsichtlich weiterer Ausführungsformen und Vorteile des erfindungsgemäßen Hartschalenzellgehäuses wird hiermit explizit auf die Erläuterungen im Zusammenhang mit den erfindungsgemäßen galvanischen Elementen, und den Figuren verwiesen. Ein weiterer Gegenstand der vorliegenden Erfindung ist eine galvanische Zelle, welche ein erfindungsgemäßes Hartschalenzellgehäuse umfasst. Insbesondere können dabei im Innenraum des Gehäusegrundkörpers des Hartschalenzellgehäuses die Zellkomponenten einer einzelnen Alkalimetallzelle angeordnet sein. Beispielsweise kann dabei im Innenraum des Gehäusegrundkörpers des Hartschalenzellgehäuses ein einzelner (Lithiumionen-)Zellwickel angeordnet sein.

Bei der Alkalimetallzelle kann es sich insbesondere um eine Lithiumzelle handeln. Insbesondere kann es sich bei der Alkalimetallzelle um Lithiumionenzelle handeln. Im Rahmen einer Ausgestaltung ist im Innenraum des Gehäusegrundkörpers ein einzelner Zellwickel, Lithiumionenzellwickel, angeordnet.

Eine als Lithiumionenzelle ausgestaltete Alkalimetallzelle kann insbesondere eine Anode aus einem so genannten Interkalationsmaterial umfassen, in welches Lithiumionen reversibel interkalierbar und deinterkalierbar ist. Beispielsweise kann die Anode einer Lithiumionenzelle ein kohlenstoffbasiertes Interkalationsmaterial, wie Graphit, Graphen, Kohlenstoffnanoröhren, Hardcarbons, Softcarbons und/oder Silicium-Kohlenstoff-Blends umfassen. Als Kathodenmaterial kann eine Lithiumionenzelle beispielsweise Übergangsmetalloxide mit Schichtstruktur, wie Lithium-Kobalt-Oxid (LiCoO₂) und/oder Lihium-Nickel-Cobalt-Manganoxid (NCM), umfassen. Weiterhin kann eine Lithiumionenzelle insbesondere mindestens ein Leitsalz, beispielsweise Lithiumhexafluorophosphat (LiPF₆) und/oder Lithiumtetrafluoroborat (LiBF₄), und gegebenenfalls mindestens ein Lösungsmittel, beispielsweise Ethylencarbonat (EC) und/oder Dimethylcarbonat (DMC), umfassen. Zwischen der Anode und der Kathode kann eine Lithiumionenzelle insbesondere einen Separator umfassen.

Zur elektrischen Kontaktierung der Anode und Kathode kann eine Lithiumionenzelle insbesondere elektrische Ableiterfolien umfassen. Die anodische Ableiterfolie kann beispielsweise aus Kupfer und die kathodische Ableiterfolie aus Aluminium ausgebildet sein.

Im Rahmen einer Ausführungsform sind die Zellkomponenten der Alkalimetallzelle, insbesondere der Lithiumionenzellwickel, in einer Kunststoffverpackungsfolie verpackt. Die so in Kunststoffverpackungsfolie verpackten Zellkomponenten der Alkalimetallzelle, insbesondere der so in Kunststoffverpackungsfolie verpackte (Lithiumionen-)Zellwickel, kann dann in dem Gehäusegrundkörper angeordnet sein.

Durch die Kunststoffverpackungsfolie können die Zellkomponenten, insbesondere der Zellwickel, insbesondere ohne einen weiteren Verfahrensschritt, elektrisch isoliert werden. Da die elektrische Isolation durch die Kunststoffverpackungsfolien gewährleistet werden kann, kann die Kunststoffverpackungsfolie andere elektrische Komponenten berühren, ohne dass es zu einem Kurzschluss kommt. So kann insbesondere eine elektrische Isolation bezüglich einer benachbarten metallischen Dampfsperrschicht gewährleistet werden.

Zudem kann durch die Kunststoffverpackungsfolien ein definierter Druck auf die Zellkomponenten, insbesondere Zellwickel, aufgebracht werden, welcher vorteilhaft für eine ordnungsgemäße Funktion der Zellen sein kann.

Dadurch, das die in Kunststoffverpackungsfolien verpackten Zellkomponenten in dem durch den Gehäusedeckel verschließbaren Innenraum des Gehäusegrundkörpers des Hartschalenzellgehäuses angeordnet sind und die Zellen nicht in der herkömmlichen offenen Modulbauweise verbaut, kann vorteilhafterweise ein Schutz vor mechanischen Einwirkungen gewährleistet werden, welcher insbesondere beim Einsatz in mobilen Anwendungen, wie in Fahrzeugen, vorteilhaft ist.

Insgesamt kann durch diese Ausführungsform vorteilhafterweise auf ein metallische Gehäuse verzichtet und das Gewicht sowie die Material- und Herstellungskosten weiter minimiert werden.

Im Rahmen einer speziellen Ausgestaltung umfassen die Kunststoffverpackungsfolien mindestens ein polar modifiziertes, insbesondere gepfropftes, Polyolefin, beispielsweise Polypropylen, zum Beispiel Maleinsäure gepfropftes Polypropylen. Insbesondere können die Kunststoffverpackungsfolien aus mindestens einem polar modifizierten, insbesondere gepfropften, Polyolefin, beispielsweise Polypropylen, zum Beispiel Maleinsäure gepfropftem Polypropylen, ausgebildet sein.

Polar modifizierten Polyolefine können vorteilhafterweise eine äußerst hohe Haftung gegenüber Metallen aufweisen. So kann vorteilhafterweise eine gute Dichtwirkung zwischen Kunststoffverpackungsfolien und metallischen Ableiterelementen, beispielsweise Ableiterstiften, so genannten Kollektoren, zum Beispiel aus Kupfer, Aluminium oder Nickel, erzielt werden.

Die Zellkomponenten, insbesondere der Zellwickel, können beispielsweise in der Kunststoffverpackungsfolie eingeschweißt sein.

Die Kunststoffverpackungsfolie kann vorteilhafterweise dünn ausgestaltet werden und zum Beispiel eine Folienstärke von ≥ 20 µm bits ≤ 100 µm aufweisen.

Die Kunststoffverpackungsfolie kann ebenfalls mindestens eine Dampfsperrschicht aufweisen. Insbesondere kann es sich dabei um die im Zusammenhang mit dem erfindungsgemäßen Hartschalenzellgehäuse erläuterten Arten von Dampfsperrschichten handeln. Die Dampfsperrschicht kann in den Kunststoff der Verpackungsfolie integriert sein und/oder die Außenseite und/oder Innenseite der Verpackungsfolie bedecken. Insofern die Kunststoffverpackungsfolie eine metallische Dampfsperrschicht aufweist, kann diese durch eine oder mehr, beispielsweise innenliegende, Isolationsschichten beziehungsweise Kunststofffolienschichten der Verpackungsfolie von den Zellekomponenten oder anderen elektrisch leitenden Komponenten elektrisch isoliert werden.

Eine elektrische Kontaktierung der im Innenraum angeordneten Alkalimetallzelle kann insbesondere über die mindestens zwei, insbesondere von Außen zugänglichen, elektrischen Schnittstellen (Terminals) erfolgen.

Hinsichtlich weiterer Ausführungsformen und Vorteile der erfindungsgemäßen galvanischen Elemente wird hiermit explizit auf die Erläuterungen im Zusammenhang mit dem erfindungsgemäßen Hartschalenzellgehäuse, und den Figuren verwiesen. Ein Verfahren zur Herstellung einer erfindungsgemäßen galvanischen Zelle, umfasst die folgenden Verfahrensschritte:
a) Ausbilden/Bereitstellen eines Gehäusegrundkörpers mit einem Innenraum zur Aufnahme der Zellkomponenten einer einzelnen Alkalimetallzelle aus Kunststoff und gegebenenfalls eines Gehäusedeckels zum Verschließen des Innenraums des Gehäusegrundkörpers aus Kunststoff,
b) Einbringen der Zellkomponenten einer einzelnen Alkalimetallzelle, insbesondere eines (Lithiumionen-)Zellwickels, in den Innenraum des Gehäusegrundkörpers, und
c) Verschließen, insbesondere luftdichtes Verschließen, des Innenraums des Gehäusegrundkörpers mit dem Gehäusedeckel,
wobei in Verfahrensschritt a) und/oder in einem nach Verfahrensschritt c) erfolgenden Verfahrensschritt d) der Kunststoff des Gehäusegrundkörpers oder der Kunststoff des Gehäusegrundkörpers und des Gehäusedeckels, beispielsweise durch eine im Rahmen des erfindungsgemäßen Verfahrens erläuterte Auftragtechnik, mit mindestens einer Dampfsperrschicht versehen beziehungsweise beschichtet wird, und/oder
wobei in Verfahrensschritt a) mindestens eine Dampfsperrschicht in den Kunststoff des Gehäusegrundkörpers oder in den Kunststoff des Gehäusegrundkörpers und des Gehäusedeckels integriert wird.

Zwischen den Verfahrensschritten c) und d) kann das Verfahren weiterhin den Verfahrensschritt c1) stoffschlüssiges Verbinden, insbesondere durch Schweißen, beispielsweise Plasmaschweißen, des Gehäusedeckels mit dem Gehäusegrundkörper. Insbesondere kann dabei eine durchgängiger, insbesondere lückenloser und/oder umlaufender, stoffschlüssiger Verbindungsbereich, beispielsweise in Form einer umlaufenden Schweißnaht, geschaffen werden. So kann vorteilhafterweise die Dampfdichtigkeit weiter verbessert werden. Bei einem nachfolgenden Verfahrensschritt d) kann der stoffschlüssige Verbindungsbereich vorteilhafterweise ebenfalls mit der mindestens einen Dampfsperrschicht beschichtet werden.

Um die Haftung einer Dampfsperrschicht auf dem Kunststoff des Gehäusegrundkörpers und Gehäusedeckels zu verbessern, kann es vorteilhaft sein die Kunststoffoberfläche des Gehäusegrundkörpers und Gehäusedeckels vor dem Aufbringen der Dampfsperrschicht einer Plasma- und/oder Korona-Behandlung zu unterziehen.

Im Rahmen einer Ausgestaltung wird in Verfahrensschritt b) eine Alkalimetallzelle in den Innenraum des Gehäusegrundkörpers eingebracht, deren Zellkomponenten, insbesondere Zellwickel, in einer Kunststoffverpackungsfolie verpackt sind.

Im Rahmen einer Ausgestaltung hiervon erfolgt das Verpacken der Zellkomponenten, insbesondere des Zellwickels dadurch, dass die Zellkomponenten einer Alkalimetallzelle, insbesondere ein Zellwickel, von einer Kunststoffverpackungsfolie ummantelt werden und deren Öffnungen anschließend, beispielsweise durch Schweißen, verschlossen werden. Insbesondere können die Zellkomponenten einer Alkalimetallzelle, insbesondere ein Zellwickel, in eine taschenförmig ausgestaltete Kunststoffverpackungsfolie eingebracht werden, deren Öffnung anschließend, beispielsweise durch Schweißen, verschlossen wird.

Zur elektrischen Kontaktierung der Zellkomponenten einer Alkalimetallzelle kann die Alkalimetallzelle insbesondere elektrische Ableiterelemente umfassen. Diese können beispielsweise in Form von Ableiterfolien, Ableiterstiften (Kollektoren), Ableiterkabeln und Ableiterblechen ausgebildet sein.

Bei einem Zellwickel können beispielsweise in die Wicklung integrierte elektrische Ableiterfolien dadurch elektrisch kontaktiert werden, dass zwei elektrische Ableiterstifte (Kollektoren) an Positionen in den Zellwickel eingesteckt werden, an denen diese jeweils eine der Ableiterfolien (kathodische beziehungsweise anodische Ableiterfolie) elektrisch kontaktieren. Die Ableiterstifte (Kollektoren) können insbesondere jeweils aus dem gleichen Material ausgebildet sein, wie die damit zu kontaktierende Ableiterfolie. Zum Beispiel kann eine kathodische Ableiterfolie aus Aluminium mit einem Ableiterstift (Kollektoren) aus Aluminium und eine anodische Ableiterfolie aus Kupfer mit einem Ableiterstift (Kollektoren) aus Kupfer elektrisch kontaktiert werden. Die Einsteckrichtung der Ableiterstifte (Kollektoren) kann dabei beispielsweise parallel zur Wicklungsachse sein.

Das Einstecken der Ableiterstifte (Kollektoren) kann grundsätzlich sowohl vor als auch nach dem Verpacken der Zellkomponenten einer Alkalimetallzelle, insbesondere eines Zellwickels, in einer Kunststoffverpackungsfolie erfolgen.

Ein weiterer Gegenstand der vorliegenden Erfindung ist eine nach einem erfindungsgemäßen Verfahren hergestellte galvanische Zelle.

Ein weiterer Gegenstand der vorliegenden Erfindung ist ein mobiles oder stationäres System, beispielsweise ein Fahrzeug, welches mindestens eine erfindungsgemäße galvanische Zelle umfasst.

Hinsichtlich weiterer Ausführungsformen und Vorteile des erfindungsgemäßen Verfahrens, des damit hergestellten galvanischen Elements und des erfindungsgemäßen mobilen oder stationären Systems wird hiermit explizit auf die Erläuterungen im Zusammenhang mit dem erfindungsgemäßen Hartschalenzellgehäuse, der erfindungsgemäßen galvanischen Zelle, dem erfindungsgemäßen Verfahren und den Figuren verwiesen.

### Zeichnungen und Beispiele

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken. Es zeigen
Fig. 1 eine schematische perspektivische Ansicht einer Ausführungsform des erfindungsgemäßen Hartschalenzellgehäuses und galvanischen Elements für beziehungsweise mit einer einzelnen galvanischen Zelle;
Fig. 2a-5 schematische Ansichten zur Veranschaulichung einer Ausführungsform eines Verfahrens, welches zur Herstellung des in Fig. 1 gezeigten Hartschalenzellgehäuses beziehungsweise galvanischen Elements ausgelegt ist; und
Fig. 6 einen schematischen Querschnitt durch das erfindungsgemässe Hartschalengehäuse, in Welchem der Gehäusegrundkörper und der Gehäusedeckel mit Verbindungselementen zur Ausbildung einer Nut-Feder-Steckverbindung zum luftdichten Verschließen des Gehäuses ausgestattet sind;

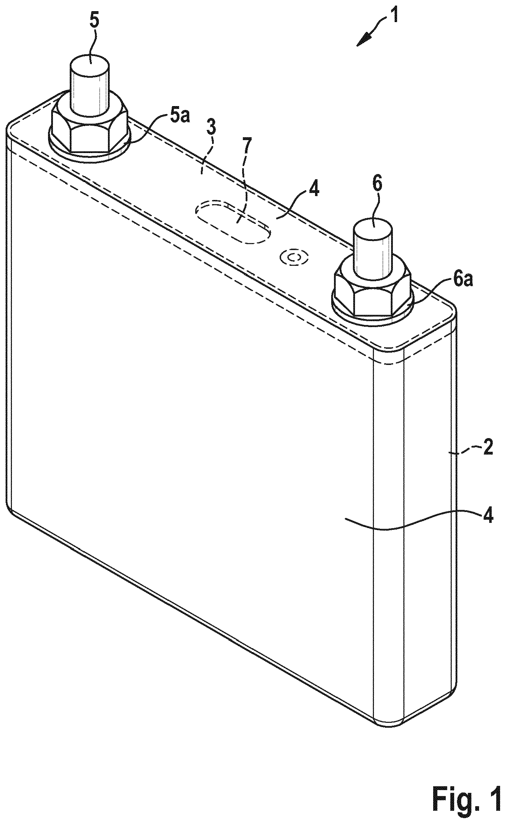

Figur 1 zeigt ein galvanisches Element 1 mit einem Hartschalenzellgehäuse, durch welches die Zellkomponenten einer einzelnen galvanischen Zelle vor Umwelteinflüssen geschützt werden. Bei der galvanischen Zelle kann es sich insbesondere um eine Lithiumionenzelle handeln. Die Zellkomponenten der galvanischen Zelle können dabei insbesondere in Form eines Zellwickels ausgebildet sein.

Figur 1 veranschaulicht, dass das Hartschalenzellgehäuse einen Gehäusegrundkörper 2 mit einem Innenraum (nicht dargestellt) zur Aufnahme der Zellkomponenten der galvanischen Zelle und einen Gehäusedeckel 3 zum Verschließen des Innenraums des Gehäusegrundkörpers 2 aufweist. Dabei sind der Gehäusegrundkörper 2 und der Gehäusedeckel 3 im Wesentlichen aus Kunststoff ausgebildet. Die im gezeigten geschlossenen Zustand des Gehäuses außen liegenden Flächen des Gehäusegrundkörpers 2 und des Gehäusedeckels 3 sind dabei im Wesentlichen vollständig mit einer Dampfsperrschicht 4 bedeckt, welche nach dem Einbringen der Zellkomponenten in den Innenraum des Gehäusegrundkörpers 2 und nach dem Verschließen des Innenraums des Gehäusegrundkörpers 2 mit dem Gehäusedeckel 3 auf den Kunststoff des Gehäusegrundkörpers 2 und des Gehäusedeckels 3 durch eine Auftragtechnik aufgebracht wurde. Unter einer im Wesentlichen vollständigen Bedeckung der im geschlossenen Zustand außen liegenden Flächen des Gehäusegrundkörpers 2 und des Gehäusedeckels 3 mit einer Schicht kann dabei verstanden werden, dass Flächenabschnitte des Gehäusegrundkörpers 2 und des Gehäusedeckels 3, welche beim Auftragen bereits durch andere Bauteile, beispielsweise Unterlegscheiben 5a,6a zur mechanischen Befestigung der elektrischen Schnittstellen (Terminals) 5,6 abgedeckt sind unbeschichtet verbleiben können. Ein Eindringen von Feuchtigkeit kann nämlich auch in diesem Fall gewährleistet werden, da zum Einen die abdeckenden Bauteile einen dampfsperrenden Effekt aufweisen können und zum Anderen die abdeckenden Bauteile auch ohne selbst einen dampfsperrenden Effekt aufzuweisen durch das nachträgliche Sprühen ebenfalls mit der Dampfsperrschicht 4 und damit mit einem dampfsperrenden Effekt versehen werden können. Da die Fügestelle zwischen Gehäusegrundkörper 2 und Gehäusedeckel 3 sowie ein Sicherheitsventil 7 unter der Dampfsperrschicht 4 liegen sind diese durch gestrichelte Linien angedeutet.

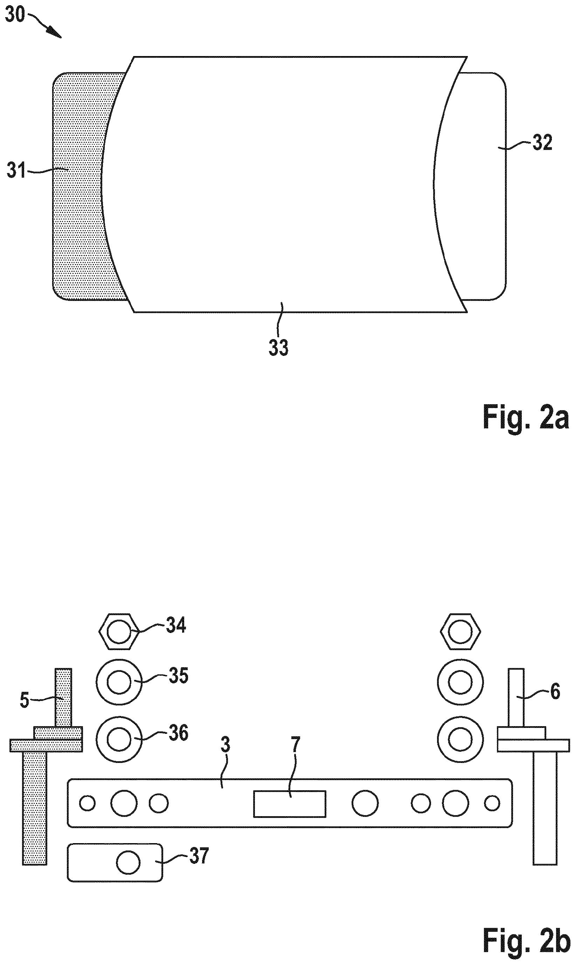

Die Figuren 2a bis 6 veranschaulichen ein Verfahren, welches zur Herstellung des in Figur 1 gezeigten Hartschalenzellgehäuses beziehungsweise galvanischen Elements ausgelegt ist.

Figur 2a zeigt, dass ein Zellwickel 30, beispielsweise ein Lithiumionenzellwickel, bereitgestellt wird, welcher eine zur unteren Blattkante senkrechte Umwicklungsachse aufweist und derart gewickelt ist, dass sowohl die anodische Ableiterfolie 31 aus Kupfer als auch die kathodische Ableiterfolie 32 aus von Außen zugänglich sind. Der Zellwickel 30 wird durch eine Folie 33 aus einem elektrisch isolierenden Material zusammengehalten.

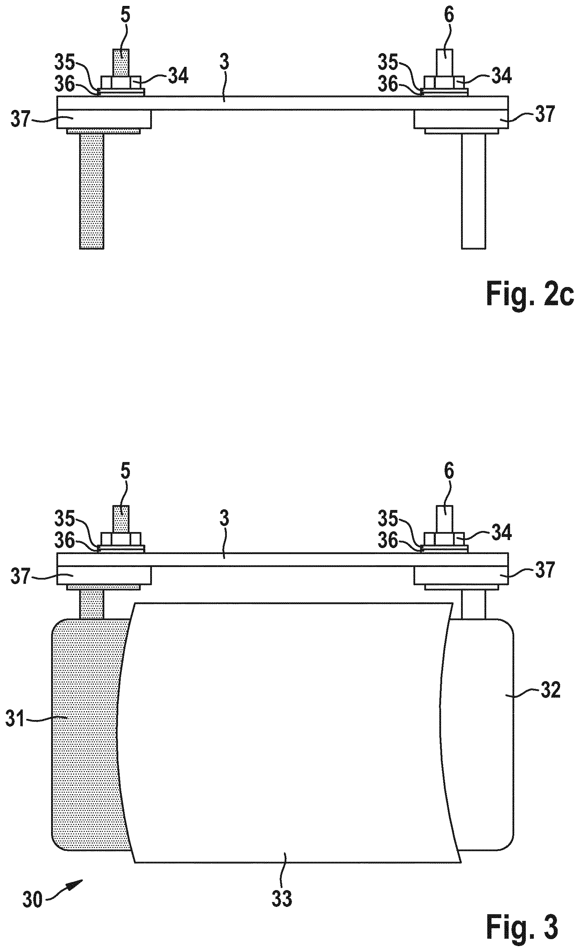

Die Figuren 2b und 2c zeigen eine Ausbildungs- und Anordnungsmöglichkeit von Ableitungselementen zur elektrischen Kontaktierung der anodischen 31 und kathodischen 32 Ableiterfolie des in Figur 2a gezeigten Zellwickels 30. Dabei zeigt Figur 2b die Ableiterelemente im vereinzelten und Figur 2c die Ableiterelemente im zusammengebauten Zustand. Die Ableiterelemente 5,6 sind einerseits als elektrische Schnittstellen (Terminals) zur elektrischen Kontaktierung von außerhalb des Gehäuses und andererseits als Ableiterstifte (Kollektoren) zur elektrischen Kontaktierung der Ableiterfolien 31,32 innerhalb des Gehäuses ausgebildet. Dabei sind die Ableiterelemente 5,6 jeweils aus dem gleichen Material wie die damit zu kontaktierende Ableiterfolie 31,32 ausgebildet. Die Figuren 2b und 2c veranschaulichen, dass die Ableiterelemente 5,6 jeweils durch eine Öffnung in einem Gehäusedeckel 3 durchführbar sind. Für den Fall, dass der Gehäusedeckel aus Metall, beispielsweise Aluminium, ausgebildet ist, sind die Isolationselemente 36,37 vorgesehen, um die Ableiterelemente 5,6 elektrisch von dem Gehäusedeckel zu isolieren. Im Fall eines aus Kunststoff ausgebildeten Gehäusedeckels kann vorteilhafterweise auf die Isolationselemente 36,37 verzichtet werden, was das Gewicht sowie die Material- und Montagekosten weiter reduziert. Die Figuren 2b und 2c illustrieren weiterhin, dass die Ableiterelemente 5,6 durch Befestigungselemente 34,35 mechanisch mit dem Gehäusedeckel 3 verbunden sind. Im Rahmen der gezeigten Ausführungsform erfolgt die mechanische Befestigung durch eine Schraubverbindung, wobei die Ableiterelemente 5,6 mit einem Außengewinde versehen sind und mit dazu korrespondierenden Mutter sowie gegebenenfalls Unterlegscheiben 35 zusammenwirken.

Figur 3 zeigt, dass die in den Figuren 2b und 2c gezeigten Ableiterelemente im in dem mit dem Deckel 3 verbauten Zustand in den in Figur 2a gezeigten Zellwickel 30 derart eingesteckt werden können, das ein Ableiterelement 5 die anodische Ableiterfolie und das andere Ableiterelement 6 die kathodische Ableiterfolie elektrisch kontaktiert.

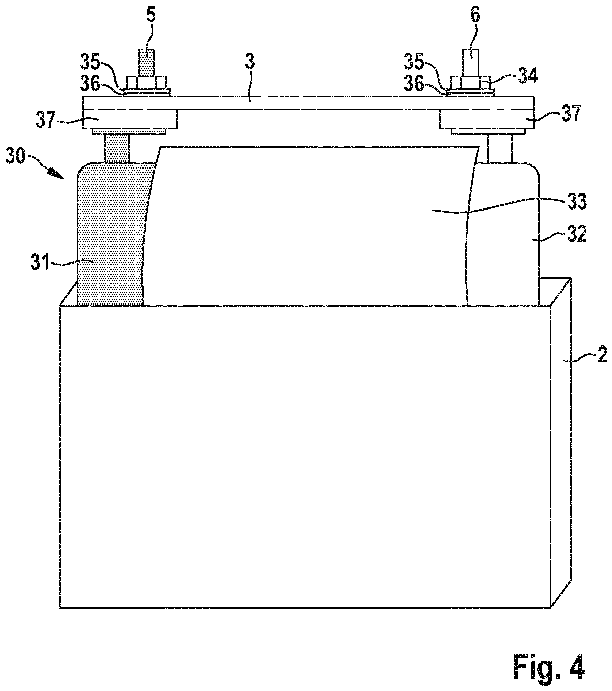

Figur 4 veranschaulicht, dass die in Figur 3 gezeigte Anordnung in den Innenraum eines Gehäusegrundkörpers 2 derart eingebracht wird, dass der Gehäusedeckel 3 nach dem vollständigen Einbringen des Zellwickels 30 den Innenraum des Gehäusegrundkörpers 2 verschließt.

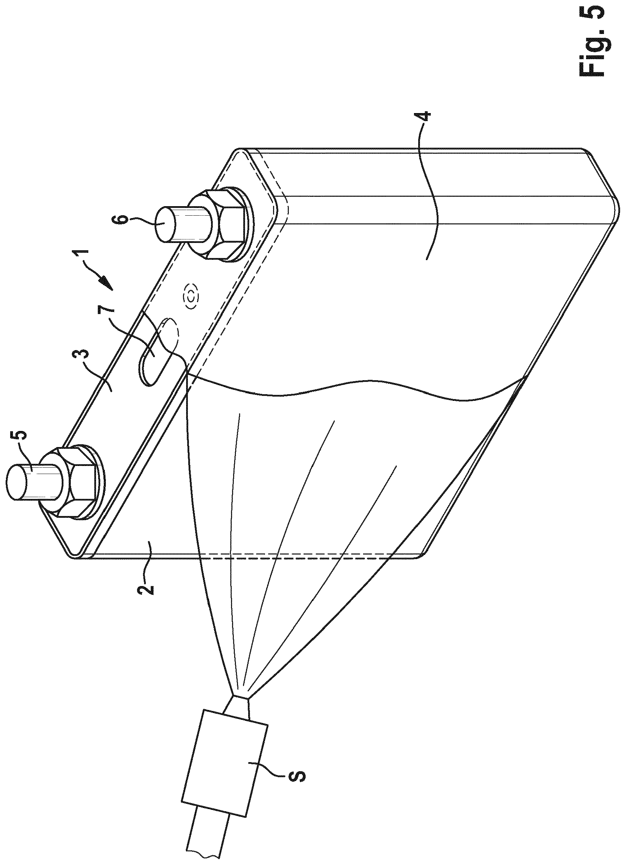

Figur 5 veranschaulicht, dass nach dem Verschließen des Hartschalenzellgehäuses, die äußeren Flächen des Gehäusegrundkörpers 2 und des Gehäusedeckels 3 sowie die Fügestelle und gegebenenfalls dazu benachbarte Bauteile, wie die Unterlegscheiben 35, durch eine Auftragtechnik, welche hier aus Veranschaulichungsgründen als Sprühtechnik dargestellt ist, mit einer Dampfsperrschicht 4 versehen werden.

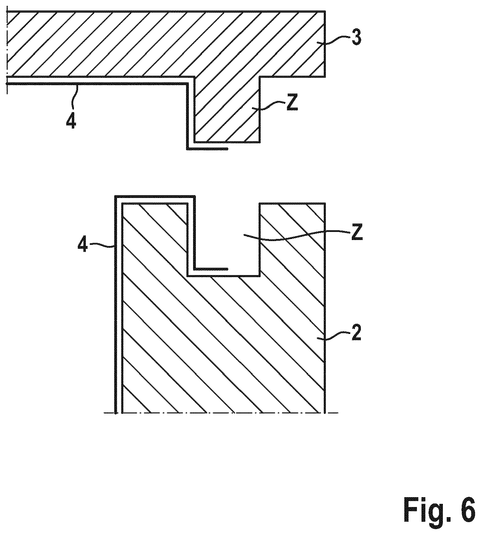

Figur 6 zeigt die Ausgestaltung des Gehäusegrundkörpers 2 und des Gehäusedeckels 3, bei der Innenraum des Gehäusegrundkörpers 2 bereits durch Zusammenfügen der beiden Gehäusebauteile luftdicht verschlossen wird. Es ist jedoch ebenso möglich den Gehäusegrundkörper 2 und den Gehäusedeckel 3 miteinander zu verschweißen, beispielsweise durch Plasmaschweißen, oder zu verkleben.

Figur 6 zeigt das Hartschalengehäusse, in dem der Gehäusegrundkörper 2 und der Gehäusedeckel 3 mit Verbindungselementen Z zur Ausbildung einer Nut-Feder-Steckverbindung zum luftdichten Verschließen des Gehäuses ausgestattet sind. Dabei umlaufen die Verbindungselemente Z die Innenraumöffnung des Gehäusegrundkörpers 2.

Die Verbindungselemente Z sind dabei ebenfalls mit der Dampfsperrschicht 4 bedeckt, dass beim Ausbilden der Steckverbindung die Dampfsperrschichten 4 der Verbindungselemente Z des Gehäusegrundkörpers 2 und des Gehäusedeckels 3 aneinander anliegen. So kann vorteilhafterweise eine besonders gute Dichtwirkung erzielt werden.

## Patentansprüche

1. Hartschalenzellgehäuse für eine einzelne Alkalimetallzelle (1), umfassend
- einen Gehäusegrundkörper (2) mit einem Innenraum zur Aufnahme der Zellkomponenten (30) einer einzelnen Alkalimetallzelle, und
- einen Gehäusedeckel (3) zum Verschliessen des Innenraums des Gehäusegrundkörpers (2), wobei der Gehäusegrundkörper (2) zumindest im Wesentlichen aus Kunststoff ausgebildet ist und mindestens eine Dampfsperrschicht (4) umfasst, **dadurch gekennzeichnet, dass** der Gehäusegrundkörper (2) und der Gehäusedeckel (3) Verbindungselemente (Z) aufweisen, welche dazu ausgelegt sind beim Verschliessen des Gehäuses eine Nut-Feder-Steckverbindung auszubilden, wobei die Verbindungselemente (Z) zum Ausbilden der Nut-Feder-Steckverbindung die Innenraumöffnung des Gehäusegrundkörpers (2) umlaufen, wobei die Verbindungselemente (Z) zum Ausbilden der Nut-Feder-Steckverbindung mit der Dampfsperrschicht (4) bedeckt beziehungsweise mit einer darin integrierten Dampfsperrschicht (4) versehen sind, und wobei beim Verschliessen des Gehäuses beziehungsweise beim Ausbilden der Nut-Feder-Steckverbindung die die Verbindungselemente (Z) bedeckende Dampfsperrschichten aneinander angepresst sind.

2. Hartschalenzellgehäuse nach Anspruch 1, wobei die Alkalimetallzelle eine Lithiumionenzelle ist.

3. Hartschalenzellgehäuse nach Anspruch 1 oder 2, wobei der Innenraum des Gehäusegrundkörpers (2) zur Aufnahme eines einzelnen Zellwickels (30) ausgelegt ist.

4. Hartschalenzellgehäuse nach einem der Ansprüche 1 bis 3, wobei der Gehäusegrundkörper (2) und der Gehäusedeckel (3) zumindest im Wesentlichen aus Kunststoff ausgebildet sind,
wobei der Gehäusegrundkörper (2) und der Gehäusedeckel (3) mindestens eine Dampfsperrschicht (4) umfassen.

5. Hartschalengehäuse nach einem der Ansprüche 1 bis 4, wobei der Gehäusegrundkörper (2) oder der Gehäusegrundkörper und der Gehäusedeckel (3)
zumindest im Wesentlichen aus einem Kunststoff ausgebildet sind, welcher mindestens ein Polymer umfasst, welches ausgewählt ist aus der Gruppe bestehend aus Polyolefinen, Polyphenylensulfiden und Kombinationen davon.

6. Hartschalenzellgehäuse nach einem der Ansprüche 1 bis 5, wobei die Dampfsperrschicht direkt auf das Material des Gehäusegrundkörpers (2) oder des Gehäusegrundkörpers (2) und des Gehäusedeckels (3) aufgebracht ist.

7. Hartschalenzellgehäuse nach Anspruch 1 bis 6,
wobei zumindest die im geschlossenen Zustand des Gehäuses innen liegenden Flächen des Gehäusegrundkörpers (2) oder des Gehäusegrundkörpers (2) und des Gehäusedeckels (3) mit einer Dampfsperrschicht (4) bedeckt sind, und/oder
wobei zumindest die im geschlossenen Zustand des Gehäuses aussen liegenden Flächen des Gehäusegrundkörpers (2) oder des Gehäusegrundkörpers (2) und des Gehäusedeckels (3) mit einer Dampfsperrschicht (4) bedeckt sind, und/oder
wobei die Dampfsperrschicht (4) in den Kunststoff des Gehäusegrundkörpers (2) oder des Gehäusegrundkörpers (2) und des Gehäusedeckels (3) integriert ist, wobei die Dampfsperrschicht (4) derart in den Kunststoff des Gehäusegrundkörpers (2) beziehungsweise des Gehäusedeckels (3) integriert ist, dass die Dampfsperrschicht (4) den Gehäuseinnenraum im geschlossenen Zustand des Gehäuses im Wesentlichen vollständig umgibt.

8. Hartschalenzellgehäuse nach einem der Ansprüche 1 bis 7, wobei die Dampfsperrschicht eine metallische, organische, polymere oder gläserne Schicht ist.

9. Hartschalenzellgehäuse nach einem der Ansprüche 1 bis 8, wobei die Dampfsperrschicht durch Aufdampfen, durch Sputtern, durch galvanisches Beschichten oder durch Sprühen oder durch Tauchen, insbesondere durch Aufdampfen, durch Sputtern oder durch galvanisches Beschichten, aufgebracht ist.

10. Hartschalenzellgehäuse nach einem der Ansprüche 1 bis 9, wobei die Dampfsperrschicht eine metallische Schicht ist, insbesondere wobei die Dampfsperrschicht Aluminium und/oder Chrom und/oder Silicium umfasst.

11. Galvanische Zelle, umfassend ein Hartschalenzellgehäuse nach einem der Ansprüche 1 bis 11, wobei im Innenraum des Gehäusegrundkörpers (2) des Hartschalenzellgehäuses die Zellkomponenten (30) einer einzelnen Alkalimetallzelle, insbesondere ein einzelner (Lithiumionen-)Zellwickel, angeordnet sind.

12. Galvanische Zelle nach Anspruch 11,
wobei die Zellkomponenten (30) der Alkalimetallzelle, insbesondere der Lithiumionenzellwickel, in einer Kunststoffverpackungsfolie verpackt ist.

13. Galvanische Zelle nach Anspruch 12,
wobei die Kunststoffverpackungsfolie mindestens ein polar modifiziertes, insbesondere gepfropftes, Polyolefin, insbesondere Maleinsäure gepfropftes Polypropylen, umfasst.

## Claims

1. Hard shell cell housing for an individual alkali metal cell (1), comprising
- a housing main body (2) with an interior space for accommodating the cell components (30) of an individual alkali metal cell, and
- a housing cover (3) for closing off the interior space of the housing main body (2), wherein the housing main body (2) is formed at least substantially from plastic and comprises at least one vapor barrier layer (4), **characterized in that** the housing main body (2) and the housing cover (3) have connecting elements (Z) which are designed to form a tongue-and-groove plug-in connection when the housing is closed off, wherein the connecting elements (Z) for forming the tongue-and-groove plug-in connection run around the opening of the interior space in the housing main body (2), wherein the connecting elements (Z) for forming the tongue-and-groove plug-in connection are covered with the vapor barrier layer (4) or provided with a vapor barrier layer (4) integrated therein, and wherein, when the housing is closed off or when the tongue-and-groove plug-in connection is formed, the vapor barrier layers covering the connecting elements (Z) are pressed against one another.

2. Hard shell cell housing according to Claim 1, wherein the alkali metal cell is a lithium-ion cell.

3. Hard shell cell housing according to Claim 1 or 2, wherein the interior space of the housing main body (2) is designed for accommodating an individual cell roll (30).

4. Hard shell cell housing according to one of Claims 1 to 3, wherein the housing main body (2) and the housing cover (3) are formed at least substantially from plastic,
wherein the housing main body (2) and the housing cover (3) comprise at least one vapor barrier layer (4).

5. Hard shell cell housing according to one of Claims 1 to 4, wherein the housing main body (2) or the housing main body and the housing cover (3) are formed at least substantially from a plastic which comprises at least one polymer selected from the group consisting of polyolefins, polyphenylene sulfides and combinations thereof.

6. Hard shell cell housing according to one of Claims 1 to 5, wherein the vapor barrier layer is applied directly to the material of the housing main body (2) or of the housing main body (2) and of the housing cover (3).

7. Hard shell cell housing according Claim 1 to 6,
wherein at least the surfaces of the housing main body (2) or of the housing main body (2) and of the housing cover (3) that are lying on the inside in the closed state of the housing are covered with a vapor barrier layer (4), and/or
wherein at least the surfaces of the housing main body (2) or of the housing main body (2) and of the housing cover (3) that are lying on the outside in the closed state of the housing are covered with a vapor barrier layer (4), and/or
wherein the vapor barrier layer (4) is integrated in the plastic of the housing main body (2) or of the housing main body (2) and of the housing cover (3), wherein the vapor barrier layer (4) is integrated in the plastic of the housing main body (2) or of the housing cover (3) in such a way that the vapor barrier layer (4) surrounds the interior space of the housing substantially completely in the closed state of the housing.

8. Hard shell cell housing according to one of Claims 1 to 7, wherein the vapor barrier layer is a metallic, organic, polymeric or vitreous layer.

9. Hard shell cell housing according to one of Claims 1 to 8, wherein the vapor barrier layer is applied by vapor depositing, by sputtering, by galvanic coating or by spraying or by immersing, in particular by vapor depositing, by sputtering or by galvanic coating.

10. Hard shell cell housing according to one of Claims 1 to 9, wherein the vapor barrier layer is a metallic layer, in particular wherein the vapor barrier layer comprises aluminum and/or chromium and/or silicon.

11. Galvanic cell, comprising a hard shell cell housing according to one of Claims 1 to 10, wherein the cell components (30) of an individual alkali metal cell, in particular an individual (lithium-ion) cell roll, are arranged in the interior space of the housing main body (2) of the hard shell cell housing.

12. Galvanic cell according to Claim 11,
wherein the cell components (30) of the alkali metal cell, in particular the lithium-ion cell roll, is/are packaged in a plastic packaging film.

13. Galvanic cell according to Claim 12,
wherein the plastic packaging film comprises at least one polar-modified, in particular grafted, polyolefin, in particular maleic acid grafted polypropylene.

## Revendications

1. Boîtier de cellule à coque rigide pour une cellule à métal alcalin (1), comprenant
- un corps principal de boîtier (2) présentant un espace intérieur destiné à la réception des composants de cellule (30) d'une cellule à métal alcalin individuelle, et
- un couvercle de boîtier (3) servant à fermer l'espace intérieur du corps principal de boîtier (2), dans lequel le corps principal de boîtier (2) est formé au moins en majeure partie de matière plastique et comprend une couche pare-vapeur (4), **caractérisé en ce que** le corps principal de boîtier (2) et le couvercle de boîtier (3) comportent des éléments de liaison (Z) qui sont conçus pour former, lors de la fermeture du boîtier, une connexion par rainure et ressort, dans lequel les éléments de liaison (Z) entourent l'ouverture de l'espace intérieur du corps principal de boîtier (2) pour former la connexion par rainure et ressort, dans lequel les éléments de liaison (Z) sont recouverts par la couche pare-vapeur (4) pour former la connexion par rainure et ressort ou sont dotés d'une couche pare-vapeur (4) intégrée à celle-ci, et dans lequel, lors de la fermeture du boîtier ou lors de la formation de la connexion par rainure et ressort, les couches pare-vapeur recouvrant les éléments de liaison (Z) sont comprimées les unes contre les autres.

2. Boîtier de cellule à coque rigide selon la revendication 1, dans lequel la cellule à métal alcalin est une cellule au lithium-ion.

3. Boîtier de cellule à coque rigide selon la revendication 1 ou 2, dans lequel l'espace intérieur du corps principal de boîtier (2) est conçu pour recevoir un enroulement de cellule (30) individuel.

4. Boîtier de cellule à coque rigide selon l'une quelconque des revendications 1 à 3, dans lequel le corps principal de boîtier (2) et le couvercle de boîtier (3) sont au moins en majeure partie constitués de matière plastique,
dans lequel le corps principal de boîtier (2) et le couvercle de boîtier (3) comprennent au moins une couche pare-vapeur (4).

5. Boîtier à coque rigide selon l'une quelconque des revendications 1 à 4, dans lequel le corps principal de boîtier (2) ou le corps principal de boîtier et le couvercle de boîtier (3) sont au moins en majeure partie constitués d'une matière plastique comprenant au moins un polymère qui est sélectionné dans le groupe constitué de polyoléfines, de sulfures de polyoléfines et de combinaisons de ceux-ci.

6. Boîtier de cellule à coque rigide selon l'une quelconque des revendications 1 à 5, dans lequel la couche pare-vapeur est directement déposée sur le matériau du corps principal de boîtier (2) ou du corps principal de boîtier (2) et du couvercle de boîtier (3).

7. Boîtier de cellule à coque rigide selon les revendications 1 à 6,
dans lequel les surfaces situées à l'intérieur du corps principal de boîtier (2) ou du corps principal de boîtier (2) et du couvercle de boîtier (3), à l'état fermé du boîtier, sont au moins recouvertes par une couche pare-vapeur (4), et/ou
dans lequel les surfaces situées à l'extérieur du corps principal de boîtier (2) ou du corps principal de boîtier (2) et du couvercle de boîtier (3), à l'état fermé du boîtier, sont au moins recouvertes par une couche pare-vapeur (4), et/ou
dans lequel la couche pare-vapeur (4) est intégrée à la matière plastique du corps principal de boîtier (2) ou du corps principal de boîtier (2) et du couvercle de boîtier (3), dans lequel la couche pare-vapeur (4) est intégrée à la matière plastique du corps principal de boîtier (2) ou du couvercle de boîtier (3) de manière à ce que la couche pare-vapeur (4) entoure pratiquement entièrement l'espace intérieur du boîtier à l'état fermé du boîtier.

8. Boîtier de cellule à coque rigide selon l'une quelconque des revendications 1 à 7, dans lequel la couche pare-vapeur est une couche métallique, organique, polymère ou de verre.

9. Boîtier de cellule à coque rigide selon l'une quelconque des revendications 1 à 8, dans lequel la couche pare-vapeur est déposée par évaporation, par pulvérisation, par revêtement galvanique ou par vaporisation ou par immersion, notamment par évaporation, par pulvérisation ou par revêtement galvanique.

10. Boîtier de cellule à coque rigide selon l'une quelconque des revendications 1 à 9, dans lequel la couche pare-vapeur est une couche métallique, en particulier dans lequel la couche pare-vapeur comprend de l'aluminium et/ou du chrome et/ou du silicium.

11. Cellule galvanique, comprenant un boîtier de cellule à coque rigide selon l'une quelconque des revendications 1 à 10, dans laquelle les composants de cellule (30) d'une cellule à métal alcalin individuelle, en particulier d'un enroulement de cellule (au lithium-ion) individuel, sont disposés dans l'espace intérieur du corps principal de boîtier (2) du boîtier de cellule à coque rigide.

12. Cellule galvanique selon la revendication 11, dans laquelle les composants de cellule (30) de la cellule à métal alcalin, en particulier de l'enroulement de cellule au lithium-ion, sont conditionnés dans un film d'emballage en matière plastique.

13. Cellule galvanique selon la revendication 12, dans laquelle le film de conditionnement en matière plastique comprend au moins une polyoléfine à polarité modifiée, notamment greffée, en particulier un polypropylène greffé par de l'acide maléique.
